# EUROPEAN PATENT APPLICATION

(11) **EP 3 492 433 A1**
(43) Date of publication of application: **05.06.2019**
(21) Application number: 18209127.2
(22) Date of filing: 29.11.2018
(51) Int. Cl.: C02F 3/12, B01D 65/02, B01D 63/16

(54) **MEMBRANE BIOREACTOR SYSTEM**

(30) Priority: 01.12.2017 KR 20170164523
(71) Applicant: Kolon Industries, Inc., Seoul 07793 (KR)
(72) Inventor: LEE, Kwang Jin, 07793 Seoul (KR); YANG, Hyoung Mo, 07793 Seoul (KR)
(74) Representative: Ter Meer Steinmeister & Partner

(57) **Abstract**

Disclosed is a membrane bioreactor system capable of minimizing the energy consumption while guaranteeing excellent membrane cleaning effect. According to the membrane bioreactor system of the present invention, a filtration apparatus for solid-liquid separation is provided in an aerobic tank and a portion of fine bubbles supplied to increase the dissolved oxygen of wastewater introduced into the aerobic tank are used for cleaning the membrane of the filtration apparatus.

## Description

### CROSS REFERENCE TO RELATED APPLICATIONS

This application claims the benefit of the Korean Patent Application No. 10-2017-0164523 filed on December 1, 2017, which is hereby incorporated by reference for all purposes as if fully set forth herein.

### BACKGROUND OF THE INVENTION

### Field of the Invention

The present invention relates to a membrane bioreactor system, and more specifically, to a membrane bioreactor system which does not require a separate site for a membrane separation tank since a filtration apparatus for solid-liquid separation is provided in an aerobic tank and, when cleaning the membrane of the filtration apparatus, makes use of a portion of the fine bubbles supplied in the aerobic tank to increase the dissolved oxygen of the wastewater introduced into the aerobic tank, thereby minimizing the energy consumption while guaranteeing excellent membrane cleaning effect.

### Discussion of the Related Art

A membrane bioreactor system (hereinafter, "MBR system") is a wastewater treatment system which combines a biological treatment process and a membrane separation process in order to remove contaminants from the wastewater.

A conventional MBR system comprises a flow control tank, an anoxic tank, an anaerobic tank, an aerobic tank, and a membrane separation tank. The anoxic tank and anaerobic tank may be omitted when the contaminants to be removed are mainly organic materials.

One of drawbacks of such conventional MBR system is that it requires a separate site for the membrane separation tank.

In order to solve the problem, it has been suggested, for example by Korean Patent No. 10-0422211 (hereinafter, "Prior Art 1"), that the solid-liquid separation should be carried out by submerging a filtration membrane in the aerobic tank rather than by intalling the membrane separation tank at a separate site.

As the solid-liquid separation is performed by the filtration membrane, the solids are accumulated on the surface of the filtration membrane, thereby causing a membrane fouling. The membrane fouling decreases a filtration efficiency. Thus, a membrane cleaning should be carried out so as to inhibit the membrane fouling.

Generally, there is provided a fine bubble generator in the aerobic tank in order to increase the dissolved oxygen of the wastewater so that the wastewater treatment by microorganism can be performed well. The fine bubbles supplied from the fine bubble generator are required to have a diameter small enough to be able to easily dissolve in water so as to substantially increase the dissolved oxygen of the wastewater. Due to such a small size, the fine bubbles themselves are of little help to the membrane cleaning.

In Prior Art 1, in order to inhibit the membrane fouling, the air continuously supplied from a blower is strongly erupted through the holes of a aeration pipe, thereby forming coarse bubbles. While rising in the feed water, the coarse bubbles scrub the membrane surface, thereby removing the solids adhered to the surface.

The energy consumption of the blower in the continuous aeration, however, is enormous to such an extent as to account for most of the entire energy consumption of the MBR system.

In order to decrease the energy consumption of the blower, alternative methods (e.g., a cyclic aeration) to control the air supply timing of the blower and/or the amount of the air supplied by the blower have been suggested. If average air supply per unit time is excessively reduced only for the energy-saving purpose, the membrane is contaminated by the impurities more quickly and the filtration efficiency drops rapidly. Besides, further energy saving is still required in such alternative methods.

Korean Patent Laid-Open Publication No. 10-2017-0121738 (hereinafter, "Prior Art 2") discloses a MBR system which performs solid-liquid separation by submerging a filtration membrane in an aerobic tank and cleans the membrane by mechanically reciprocating the filtration membrane in the aerobic tank rather than by performing an aeration cleaning using a blower and an aeration pipe.

Even though the cleaning method of Prior Art 2 requires relatively low energy consumption compared to that of Prior Art 1, however, it cannot delay the decline of cleaning efficiency as long as required in this field because the cleaning effect thereof is also relatively low.

### SUMMARY OF THE INVENTION

Accordingly, the present invention is directed to a MBR system which substantially obviate one or more problems due to limitations and disadvantages of the related art.

An aspect of the present invention is to provide a membrane bioreactor system which does not require a separate site for a membrane separation tank since a filtration apparatus for solid-liquid separation is provided in an aerobic tank and, when cleaning the membrane of the filtration apparatus, makes use of a portion of the fine bubbles supplied in the aerobic tank to increase the dissolved oxygen of the wastewater introduced into the aerobic tank, thereby minimizing the energy consumption while guaranteeing excellent membrane cleaning effect.

Additional aspects and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

According to one aspect of the present invention, there is provided a MBR system comprising: an aerobic tank configured to receive a wastewater from at least one of a flow control tank, an anoxic tank and an anaerobic tank; a fine bubble generator disposed in the aerobic tank to increase a dissolved oxygen of the wastewater introduced into the aerobic tank; and a filtration apparatus submerged in the wastewater introduced into the aerobic tank, the filtration apparatus disposed directly above the fine bubble generator, wherein the filtration apparatus comprises: a filtration membrane module; and a bubble-converting device disposed below the filtration membrane module and configured to convert a portion of fine bubbles provided by the fine bubble generator into coarse bubbles suitable for filtration membrane cleaning, wherein the bubble-converting device comprises: a case having a lower opening and a collecting space configured to confine the portion of the fine bubbles introduced therein via the lower opening; a main pipe extending downwardly from a circumference of a first hole formed in an upper plate of the case; and a branch pipe extending from a circumference of a second hole formed in a side of the main pipe, and wherein the main pipe is in fluid communication with the collecting space via the branch pipe.

A diameter of the first hole may be 10 to 50 mm.

The fine bubble generator may be configured to provide the fine bubbles having a diameter of 1 to 3 mm.

The filtration apparatus may be disposed opposite a wastewater inlet of the aerobic tank in the aerobic tank.

An opening of the branch pipe opposite to the second hole may be positioned closer to the upper plate of the case than the second hole.

The opening of the branch pipe may face the upper plate of the case.

The MBR system may further comprise a vibration apparatus configured to enable a rectilinear reciprocating movement of the filtration apparatus submerged in the wastewater.

The vibration apparatus may comprise: a motor; a rotor rotatable by the motor; a shaft configured to convert a rotary motion of the rotor into a rectilinear reciprocating motion of the filtration apparatus; and a rail configured to guide the rectilinear reciprocating motion of the filtration apparatus.

The filtration apparatus may further comprise a frame, and the filtration membrane module and the bubble-converting device may be respectively installed in the frame.

The MBR system may further comprise a rod for coupling the bubble-converting device to the frame, the rod configured to enable the bubble-converting device to rotate on an axis of the rod within a predetermined angle range.

The frame may comprise a lower horizontal member having a third hole, one end of the rod may be connected to the bubble-converting device, the other end of the rod may be inserted in the third hole of the lower horizontal member, and a lower part of the rod may have a curved cross section so that the rod can rotate in the third hole of the lower horizontal member within the predetermined angle range

According to the present invention, a portion of the fine bubbles supplied in an aerobic tank to increase the dissolved oxygen of an wastewater can be used for filtration membrane cleaning. Therefore, the MBR system of the present invention does not require separate aeration instruments such as a blower and an aeration pipe, and thus can minimize the energy consumption for the membrane cleaning without causing deterioration of the filtration efficiency.

Furthermore, according to one embodiment of the present invention, the cleaning effect can be maximized by, in addition to the membrane cleaning using the portion of the fine bubbles, vibrating the filtration apparatus when the filtration is performed.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 schematically shows a MBR system according to an embodiment of the present invention;
FIG. 2 schematically shows a filtration apparatus according to an embodiment of the present invention;
FIG. 3 schematically shows a bubble-converting device according to an embodiment of the present invention;
FIG. 4 shows the cross section of the bubble-converting device along the IV-IV' line of FIG. 3;
FIGs. 5(A) to 5(C) illustrate the operation of a bubble-converting device according to an embodiment of the present invention;
FIG. 6 illustrates a vibration apparatus according to an embodiment of the present invention; and
FIG. 7 illustrates a way how a lower horizontal member of a frame and a bubble-converting device are coupled to each other according to an embodiment of the present invention.

### DETAILED DESCRIPTION OF THE INVENTION

Reference will now be made in detail to the exemplary embodiments of the present invention, examples of which are illustrated in the accompanying drawings. Wherever possible, the same reference numbers will be used throughout the drawings to refer to the same or like parts.

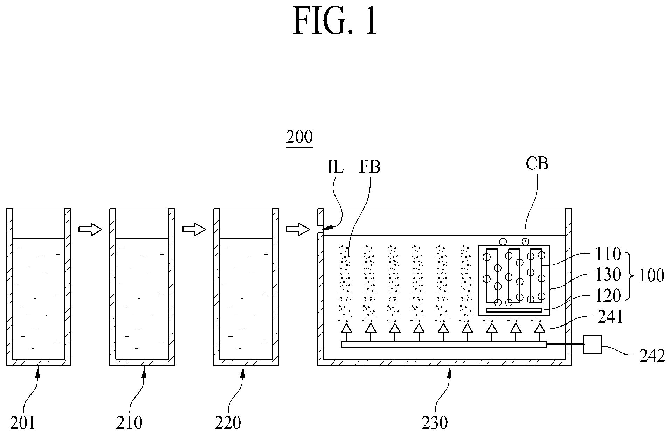

FIG. 1 schematically shows a MBR system 200 according to an embodiment of the present invention.

As illustrated in FIG. 1, a MBR system 200 according to an embodiment of the present invention comprises a flow control tank 201, an anoxic tank 210, an anaerobic tank 220, and an aerobic tank 230.

Alternatively, either of the anoxic tank 210 or the anaerobic tank 220 or both of them may be omitted depending on the objects and/or functions of the MBR system 200.

The flow control tank 201 is generally for equalization of flow and water quality and, in some cases, may further function as a bioreactor.

In the anoxic tank 210, nitrous acid and/or nitric acid are/is reduced into nitrogen gas by denitrifying microbes and removed.

In the anaerobic tank 220, organic materials are decomposed into methane gas and/or carbon dioxide by anaerobes and removed, and phosphorus accumulating bacterium releases phosphorus while performing intracellular synthesis of organic materials.

In the aerobic tank 230, organic materials are decomposed into carbon dioxide and water by aerobes, nitrification of ammoniac nitrogen into nitrous acid and/or nitric acid is carried out by nitrifying microbes, and phosphorus accumulating bacterium accumulates phosphorus again while decomposing the organic materials produced through intracellular synthesis.

According to the present invention, the wastewater from at least one of the flow control tank 201, anoxic tank 210, and anaerobic tank 220 is introduced into the aerobic tank 230. For example, (i) as shown in FIG. 1, the wastewater passing through the flow control tank 201, anoxic tank 210, and anaerobic tank 220 sequentially is introduced into the aerobic tank 230, (ii) the wastewater passing through the flow control tank 201, anaerobic tank 220, and anoxic tank 210 sequentially is introduced into the aerobic tank 230, (iii) the wastewater passing through the flow control tank 201 and anoxic tank 210 sequentially is introduced into the aerobic tank 230, (iv) the wastewater passing through the flow control tank 201 and anaerobic tank 220 sequentially is introduced into the aerobic tank 230, or (v) the wastewater passing through the flow control tank 201 is directly introduced into the aerobic tank 230.

The MBR system 200 of the present invention further comprises a fine bubble generator 241 disposed in the aerobic tank 230. The fine bubble generator 241 receives an air from a blower 242 and generates fine bubbles FB, thereby increasing the dissolved oxygen of the wastewater in the aerobic tank 230. In order to substantially increase the dissolved oxygen of the wastewater, the fine bubbles FB supplied by the fine bubble generator 241 into the wastewater have a diameter small enough to be able to easily dissolve in the water, for example a diameter of 1 to 3 mm.

The MBR system 200 of the present invention further comprises a filtration apparatus 100 which is submerged in the wastewater introduced in the aerobic tank 230 and carries out solid-liquid separation therein. The filtration apparatus 100 is disposed directly above the fine bubble generator 241 in the aerobic tank 230.

Therefore, according to the present invention, since the filtration apparatus 100 is provided in the aerobic tank 230, a separate site for a membrane separation tank is not additionally required.

The filtration apparatus 100 of the present invention comprises a filtration membrane module 110 and a bubble-converting device 120 disposed below the filtration membrane module 110 and configured to convert a portion of fine bubbles FB provided by the fine bubble generator 241 into coarse bubbles CB suitable for membrane cleaning. The filtration membrane module 110 and the bubble-converting device 120 may be respectively installed in a frame 130.

According to the present invention, instead of using separate instruments such as a blower and an aeration pipe to produce coarse bubbles necessary for aeration cleaning, a portion of the fine bubbles supplied by the fine bubble generator 241 in the aerobic tank 230 in order to increase the dissolved oxygen of the wastewater are converted into the coarse bubbles CB by the bubble-converting device 120.

Thus, according to the present invention, a proper aeration cleaning can be performed using a portion of the fine bubbles FB supplied in the aerobic tank 230 without requiring installation and operation of a separate blower for an aeration cleaning, and thus the energy consumption can be remarkably reduced without deteriorating the filtration efficiency for the solid-liquid separation.

The coarse bubbles CB suitable for membrane cleaning cannot make a substantial contribution to the increase of the dissolved oxygen of the wastewater because they rise rapidly in the wastewater. Therefore, according to one embodiment of the present invention, as illustrated in FIG. 1, the filtration apparatus 100 may be disposed opposite the wastewater inlet IL of the aerobic tank 230 in the aerobic tank 230 (i.e., at the latter part of the aerobic tank 230).

In other words, since the biological reaction such as nitrification reaction occurs mainly at the former part of the aerobic tank 230, the fine bubbles FB generated by the fine bubble generator 241 and supposed to be supplied to the wastewater positioned at the former part of the aerobic tank 230 are supplied thereto in their entirety so that the dissolved oxygen of the wastewater can be sufficiently increased and the wastewater treatment by microbes can be performed well. On the other hand, the fine bubbles FB supposed to be supplied to the wastewater positioned at the latter part of the aerobic tank 230 may be used for producing the coarse bubbles CB suitable for membrane cleaning.

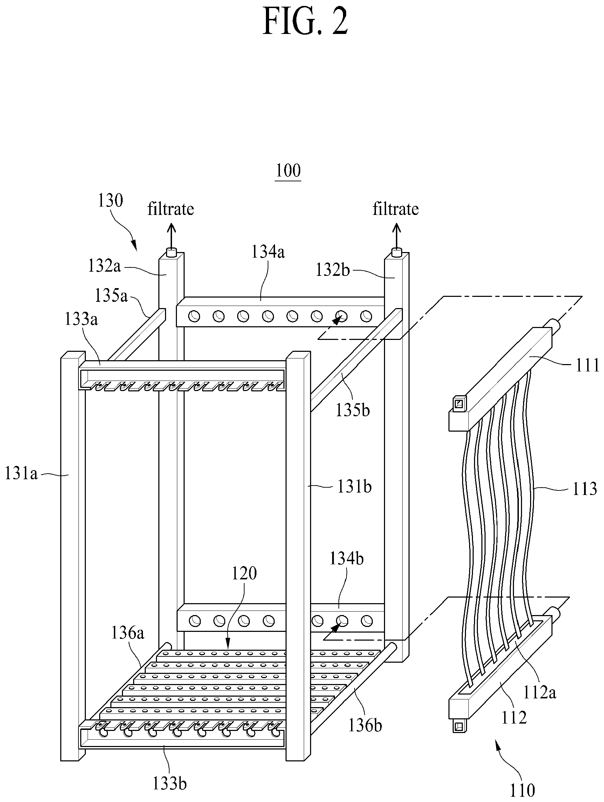

Hereinafter, a filtration apparatus 100 according to the present invention will be described in more detail referring to FIG 2 to FIG. 5.

As illustrated in FIG. 2, the filtration apparatus 100 of the present invention comprises at least one filtration membrane module 110 and at least one bubble-converting device 120 disposed below the filtration membrane module 110. The filtration membrane module 110 and the bubble-converting device 120 may be respectively installed in a frame 130.

The filtration membrane module 110 comprises first and second headers 111 and 112 and a filtration membrane 113 positioned therebetween, the filtration membrane 113 being in fluid communication with at least one of the first and second headers 111 and 112. Although a hollow fiber membrane is illustrated in FIG. 1 as the filtration membrane 113, a flat sheet membrane may be adopted as the filtration membrane 113 in stead of a hollow fiber membrane.

The filtration membrane 113 may be formed of polysulfone, polyether sulfone, sulfonated polysulfone, polyvinylidene fluoride (PVDF), polyacrylonitrile (PAN), polyimide, polyamideimide, polyesterimide, or any combination thereof.

The hollow fiber membrane which can be used as the filtration membrane 113 may be a single-layer membrane type or a composite membrane type. The hollow fiber membrane of a composite membrane type comprises a tubular braid and a polymer thin film coated on the outer surface thereof. The tubular braid may be made of polyester or polyamide (e.g., nylon), and the polymer thin film may be formed of polysulfone, polyether sulfone, sulfonated polysulfone, polyvinylidene fluoride (PVDF), polyacrylonitrile (PAN), polyimide, polyamideimide, polyesterimide, or any combination thereof.

One end of the filtration membrane 113 is fixed to the first header 111 through a first fixing layer (not shown), and the other end thereof is fixed to the second header 112 through a second fixing layer (112a).

At least one of the first and second headers 111 and 112 has a water collecting space therein, and the filtration membrane 113 is in fluid communication with the water collecting space.

As illustrated in FIG. 2, the frame 130 may comprise two vertical members 131a and 131b, two vertical pipes 132a and 132b, upper and lower cross bars 133a and 133b, upper and lower cross pipes 134a and 134b, two upper horizontal members 135a and 135b, and two lower horizontal members 136a and 136b.

One ends of the first and second headers 111 and 112 are coupled to and in fluid communication with the upper and lower cross pipes 134a and 134b, respectively, and the other ends thereof are coupled to the upper and lower cross bars 133a and 133b, respectively.

The filtrate produced by the filtration membrane 113 flows into the upper and lower cross pipes 134a and 134b of the frame 130 via the first and second headers 111 and 112, and then is discharged out of the filtration apparatus 100 via at least one of the two vertical pipes 132a and 132b.

Alternatively, the vertical pipes 132a and 132b may be replaced with vertical members without a fluid passage, and the filtrate introduced into the upper and lower cross pipes 134a and 134b may be discharged out of the filtration apparatus 100 via a separate pipe.

As illustrated in FIG. 2, both ends of the bubble-converting device 120 disposed below the filtration membrane module 110 may be directly or indirectly coupled to the lower horizontal members 136a and 136b, respectively.

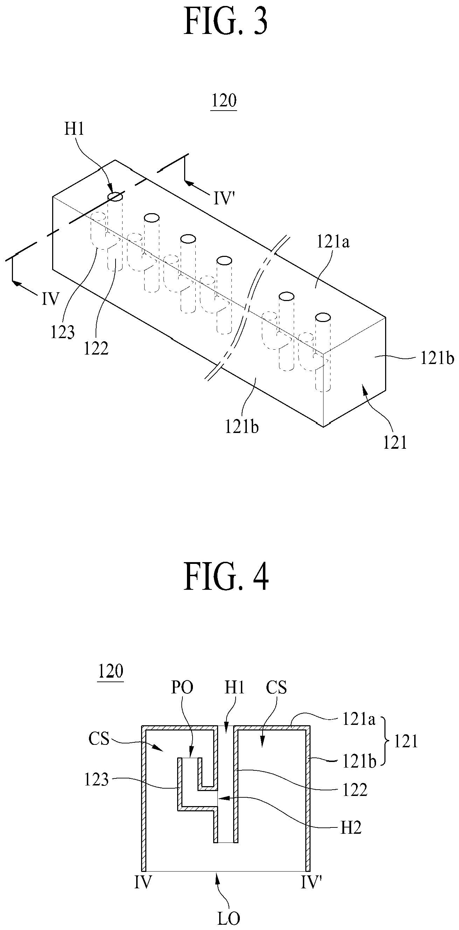

FIG. 3 schematically shows a bubble-converting device 120 of the present invention, and FIG. 4 shows the cross section of the bubble-converting device 120 along the IV-IV' line of FIG. 3.

As illustrated in FIG. 3 and FIG. 4, the bubble-converting device 120 of the present invention comprises a case 121 having a lower opening LO. The case 121 comprises an upper plate 121a and side plates 121b extending downwardly from the circumference of the upper plate 121a. A collecting space CS surrounded by the upper plate 121a and side plates 121b is formed in the case 121. That is, the case 121 has a collecting space configured to confine the fine bubbles introduced therein via the lower opening LO. Accordingly, a portion of the fine bubbles FB supplied by the fine bubble generator 241 in the aerobic tank 230 may be confined in the collecting space CS of the case 121 and exploited for the aeration cleaning of the filtration membrane 113.

The upper plate 121a of the case 121 has at least one first hole H1. When the upper plate 121a has a plurality of first holes H1, as shown in FIG. 3, the first holes H1 may be formed in the upper plate 121a along the longitudinal direction of the case 121.

As illustrated in FIG. 4, the bubble-converting device 120 of the present invention further comprises a main pipe 122 extending downwardly from the circumference of the first hole H1 formed in the upper plate 121 and a branch pipe 123 extending from a second hole H2 formed in a side of main pipe 122. The main pipe 122 is in fluid communication with the collecting space CS via the branch pipe 123.

The opening PO of the branch pipe 123 disposed opposite to the second hole H2 may be positioned closer to the upper plate 121a of the case 121 than the second hole H2. Further, the opening PO of the branch pipe 123 may face the upper plate 121a.

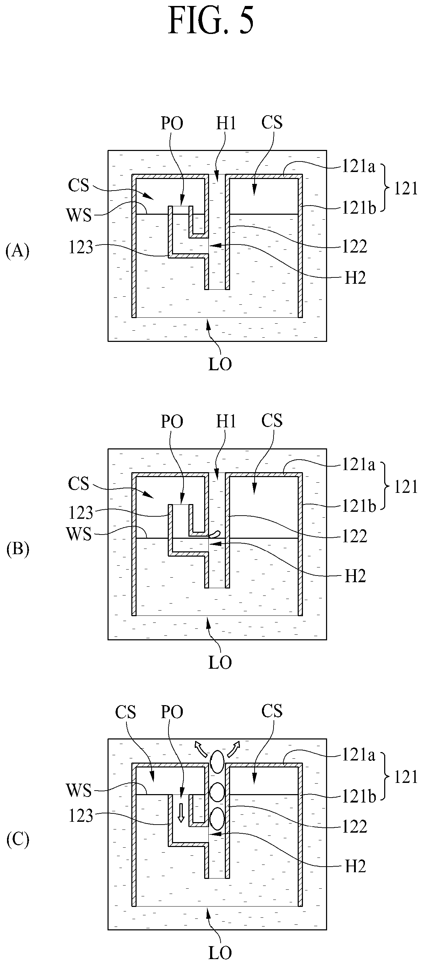

Hereinafter, referring to FIGs 5(A) to 5(C), the operation of the bubble-converting device 120 of the present invention will be described in detail.

When the filtration apparatus 100 of the present invention is submerged in the feed water to perform a filtering operation, not only the inside of the case 121 of the bubble-converting device 120 but also the insides of the main pipe 122 and branch pipe 123 are filled with the feed water.

As shown in FIG. 5(A), when the fine bubbles FB are supplied by the fine bubble generator 241 to increase the dissolved oxygen of the feed water, a portion of the fine bubbles FB are confined in the collecting space CS of the case 121 of the bubble-converting device 120, thereby forming an air layer.

As the fine bubbles FB are continuously supplied by the fine bubble generator 241, the water surface WS in the case 121 continuously gets lower. When the water surface WS reaches the same level as the second hole H2 formed in the side of the main pipe 122, the air confined in the collecting space moves into the main pipe 122 via the second hole H2 as shown in FIG. 5(B), comes out of the bubble-converting device 120 via the first hole H1 of the case, and rises toward the filtration membrane module 110.

As mentioned above, the opening PO of the branch pipe 123 disposed opposite to the second hole H2 of the main pipe 122 may be positioned closer to the upper plate 121a of the case 121 than the second hole H2. Accordingly, once the air confined in the collecting space CS starts to come out of the bubble-converting device 120, as shown in FIG. 5(C), the water surface WS in the case 121 rises and, until the water surface WS rising inside the case 121 reaches the same level as the opening PO of the branch pipe 123, the air is continuously discharged out of the bubble-converting device 120 in accordance with siphonage and forms coarse bubbles CB suitable for cleaning of the filtration membrane 113. Therefore, according to the present invention, the coarse bubbles CB for cleaning of the filtration membrane 113 can be provided without any additional supply of air by a blower, and thus the energy consumption for aeration cleaning can be minimized while guaranteeing the suitable cleaning effect.

In order for the air discharged out of the bubble-converting device 120 via the first hole H1 to be able to form coarse bubbles CB suitable for cleaning of the filtration membrane 113, the first hole H1 may have a diameter of 3 to 30 mm. Preferably, in order to maximize the cleaning effect, the diameter may be 10 to 50 mm which is larger than that of the aeration hole of the conventional aeration pipe (generally, about 7 mm).

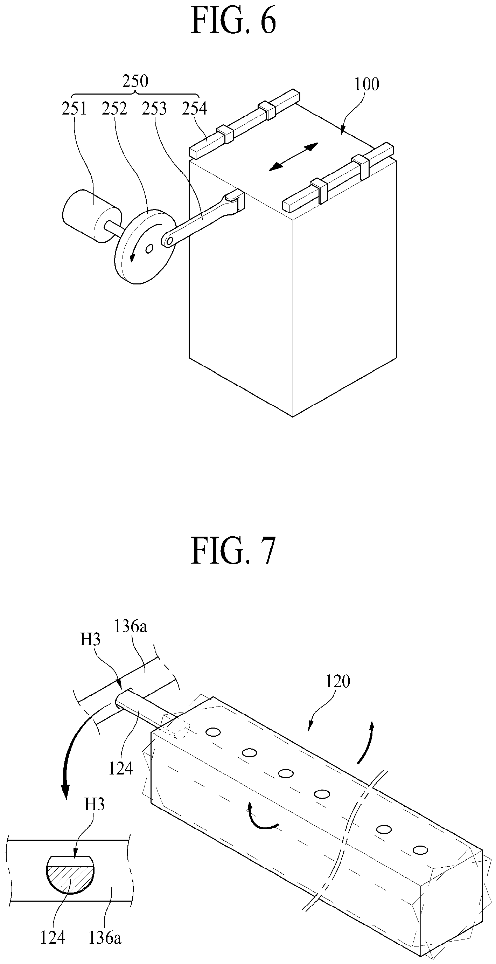

As illustrated in FIG. 6, the MBR system 200 of the present invention may further comprise a vibration apparatus 250 configured to enable a rectilinear reciprocating movement of the filtration apparatus 100 submerged in the wastewater of the aerobic tank 230, thereby further maximizing the membrane cleaning efficiency. In other words, in addition to the membrane surface scrubbing by the coarse bubbles CB, the filtration is vibrated in the wastewater so that the solids adhered to the surface of the filtration membrane 113 can be removed more easily.

The vibration apparatus 250 according to one embodiment of the present invention may comprise a motor 251, a rotor 252 rotatable by the motor 251, a shaft configured to convert a rotary motion of the rotor into a rectilinear reciprocating motion of the filtration apparatus 100, and a rail 254 configured to guide the rectilinear reciprocating motion of the filtration apparatus 100.

Alternatively, in order to control the rate of the rectilinear reciprocating motion, the motor 251 and the rotor 252 may be coupled to each other with a pulley and a belt.

FIG. 7 illustrates a way how the lower horizontal member 136a of the frame 130 and the bubble-converting device 120 are coupled to each other according to an embodiment of the present invention.

As illustrated in FIG. 7, the filtration apparatus 100 of the present invention may further comprise a rod 124 for coupling the bubble-converting device 120 to the frame 130. The rod 124 may be configured to enable the bubble-converting device 120 to rotate on an axis of the rod 124 within a predetermined angle range.

Particularly, one end of the bubble-converting device 120 is connected to one end of the rod 124, and the other end of the rod 124 is inserted in the third hole H3 formed in the lower horizontal member 136a of the frame 130. Although not shown in FIG. 7, the other end of the bubble-converting device 120 is also indirectly coupled to the opposite lower horizontal member 136b of the frame 130 similarly.

According to one embodiment of the present invention, the rod 124 and third hole H3 are configured to enable the bubble-converting device 120 to rotate on an axis of the rod 124 within a predetermined angle range. For instance, the lower part of the rod 124 may have a curved cross section so that the rod 124 can rotate in the third hole H3. Further, the third hole H3 may have a cross section of such shape that the rod 124 can rotate therein only within a predetermined angle range (e.g., as illustrated in FIG. 7, a circular cross section with the top part thereof cut out).

Accordingly, when the filtration apparatus 100 reciprocates, the bubble-converting device 120 can rotate on the axis of the rod 124 with the predetermined angle range. Consequently, even before the air layer is formed within the collecting space CS in a volume large enough for the water surface WS in the case 121 to reach the same level as the second hole H2 formed in the side of the main pipe 122, a portion of the air layer can escape from the collecting space CS and form the coarse bubbles CB to contribute to the cleaning of the filtration membrane 113.

Hereinafter, the present invention will be described in more detail with reference to the following Examples and Comparative Examples. The following Examples are only given for better understanding of the present invention and should not be construed as limiting the scope of the present invention.

### Example 1-1

A filtration apparatus illustrated in FIG. 2 (No. of filtration membrane modules: 38, membrane surface area of filtration membrane module: about 22.1 m², total membrane surface area of filtration apparatus: about 840 m²) was submerged in the wastewater of the aerobic tank and operated with permeate flux of 25 LMH(L/m²/h) for 14 days. The filtration was carried out by repeating a unit process (12 hours) consisting of the steps of repeating filtration (9 min.) and backwashing (0.5 min., backwashing flux: 37.5 LMH) 76 times and performing a maintenance cleaning using 200mg/L of NaOCI solution for 1 minute. The diameter of the aeration hole (i.e., 'the first hole (H1)') of the bubble-converting device was 50mm. The aeration rate per unit area of the filtration membrane (hereinafter, 'aeration rate') was 0.001 Nm³/min/m². During the operation of 14 days, transmembrane pressure (TMP) rise of 0.007 bar was observed.

### Example 1-2

A filtration was carried out in the same manner as in Example 1-1, except that the diameter of the aeration hole of the bubble-converting device was 30mm. During the operation of 14 days, TMP rise of 0.008 bar was observed.

### Example 1-3

A filtration was carried out in the same manner as in Example 1-1, except that the diameter of the aeration hole of the bubble-converting device was 10mm. During the operation of 14 days, TMP rise of 0.009 bar was observed.

### Example 1-4

A filtration was carried out in the same manner as in Example 1-1, except that the diameter of the aeration hole of the bubble-converting device was 7mm. During the operation of 14 days, TMP rise of 0.01 bar was observed.

### Example 1-5

A filtration was carried out in the same manner as in Example 1-1, except that the diameter of the aeration hole of the bubble-converting device was 3mm. During the operation of 14 days, TMP rise of 0.03 bar was observed.

### Example 2-1

A filtration was carried out in the same manner as in Example 1-1, except that the filtration apparatus was vibrated (amplitude: 10cm, reciprocating 0.6 times per 1 sec.) during the filtration operation. During the operation of 14 days, TMP rise of 0.005 bar was observed.

### Example 2-2

A filtration was carried out in the same manner as in Example 2-1, except that the diameter of the aeration hole of the bubble-converting device was 30mm. During the operation of 14 days, TMP rise of 0.006 bar was observed.

### Example 2-3

A filtration was carried out in the same manner as in Example 2-1, except that the diameter of the aeration hole of the bubble-converting device was 10mm. During the operation of 14 days, TMP rise of 0.007 bar was observed.

### Example 2-4

A filtration was carried out in the same manner as in Example 2-1, except that the diameter of the aeration hole of the bubble-converting device was 7mm. During the operation of 14 days, TMP rise of 0.008 bar was observed.

### Example 2-5

A filtration was carried out in the same manner as in Example 2-1, except that the diameter of the aeration hole of the bubble-converting device was 3mm. During the operation of 14 days, TMP rise of 0.022 bar was observed.

### Comparative Example 1

A filtration was carried out in the same manner as in Example 1-1, except that the bubble-converting device of the filtration apparatus was replaced with a convention aeration pipe (aeration hole diameter: 7mm) and an air was continuously supplied by a blower to the aeration pipe in such an amount that the aeration rate could be 0.004 Nm³/min/m². During the operation of 14 days, TMP rise of 0.01 bar was observed.

### Comparative Example 2

A filtration was carried out in the same manner as in Comparative Example 1, except that the aeration rate was 0.003 Nm³/min/m². During the operation of 14 days, TMP rise of 0.06 bar was observed.

### Comparative Example 3

A filtration was carried out in the same manner as in Comparative Example 1, except that, instead of the continuous aeration, a cyclic aeration was performed by repeating air supply for 10 seconds and air non-supply for 10 seconds (i.e., the aeration rate was 0.002 Nm³/min/m²). During the operation of 14 days, TMP rise of 0.012 bar was observed.

### Comparative Example 4

A filtration was carried out in the same manner as in Comparative Example 3, except that the aeration rate was 0.001 Nm³/min/m². During the operation of 14 days, TMP rise of 0.07 bar was observed.

### Comparative Example 5

A filtration was carried out in the same manner as in Example 2-1, except that the bubble-converting device was removed from the filtration apparatus (i.e., the aeration rate was 0 Nm³/min/m²). During the operation of 14 days, TMP rise of 0.015 bar was observed.

The comparison of the membrane cleaning efficiencies of the Examples and Comparative Examples is shown in the following Table 1.

**[Table 1]**

| | **Cleaning Method** | **Aeration Hole Diameter (mm)** | **Aeration Rate (Nm³/min/m²)** | **TMP Rise (bar)** |
|---|---|---|---|---|
| Ex. 1-1 | bubble-converting | 50 | 0.001 | 0.007 |
| Ex. 1-2 | bubble-converting | 30 | 0.001 | 0.008 |
| Ex. 1-3 | bubble-converting | 10 | 0.001 | 0.009 |
| Ex. 1-4 | bubble-converting | 7 | 0.001 | 0.01 |
| Ex. 1-5 | bubble-converting | 3 | 0.001 | 0.03 |
| Ex. 2-1 | bubble-converting & vibration | 50 | 0.001 | 0.005 |
| Ex. 2-2 | bubble-converting & vibration | 30 | 0.001 | 0.006 |
| Ex. 2-3 | bubble-converting & vibration | 10 | 0.001 | 0.007 |
| Ex. 2-4 | bubble-converting & vibration | 7 | 0.001 | 0.008 |
| Ex. 2-5 | bubble-converting & vibration | 3 | 0.001 | 0.022 |
| Comp. Ex. 1 | continuous aeration | 7 | 0.004 | 0.01 |
| Comp. Ex. 2 | continuous aeration | 7 | 0.003 | 0.06 |
| Comp. Ex. 3 | cyclic aeration | 7 | 0.002 | 0.012 |
| Comp. Ex. 4 | cyclic aeration | 7 | 0.001 | 0.07 |
| Comp. Ex. 5 | vibration | - | 0 | 0.015 |

As can be seen in Table 1, the TMP rises during the operation for 14 days were 0.06 bar and 0.07 bar in Comparative Example 2 and Comparative Example 4, respectively, which means that the filtration membranes were not cleaned properly and sufficiently.

Generally, when TMP of a filtration membrane is critical TMP (0.6 bar) or higher, a recovery rate achievable by a recovery cleaning is considerably reduced. Therefore, before TMP of a filtration membrane reaches the critical TMP (0.6 bar), filtration needs to be stopped and recovery cleaning should be performed. Generally, the recovery cleaning is performed every 6 months in this industry. That is, TMP of a filtration membrane is required to be lower than the critical TMP (0.6 bar) even after six-month operation.

Assuming the initial TMP of a filtration membrane is about 0.2 bar, if TMP rise during the operation for 14 days is 0.06 bar as is the case of Comparative Example 2 or 0.07 bar as is the case of Comparative Example 4, it is more than likely that TMP of the filtration membrane after six-month operation would be higher than the critical TMP (0.6 bar) (theoretically, not less than 0.92 bar and not less than 1.04 bar, respectively). Therefore, the recovery cleaning cycle is required to be shorter than 6 months, which is problematic.

Comparative Examples 1, 3, and 5 the TMP rises of which during 14-day operations were 0.01 bar, 0.012 bar, and 0.015 bar, respectively, are the cases in which the contamination of the filtration membranes was sufficiently delayed. In Comparative Examples 1 and 3, however, relatively large amount of air (0.004 Nm³/min/m² and 0.002 Nm³/min/m², respectively) was used, and thus such a large amount of energy was consumed for the aeration cleaning. Further, considering the fact that a recovery rate achievable by a recovery cleaning gets lower as the recovery cleaning is repeated and Comparative Example 5 showed TMP rise of 0.015 bar which is greater than those of Comparative Examples 1 and 3, it is more than likely that, after a long term operation of more than 5 years, TMP of the filtration membrane of Comparative Example 5 reaches the critical TMP before the next recovery cleaning cycle comes, thereby requiring additional energy consumption.

On the other hand, from the fact that only small TMP rise of no more than 0.005 to 0.022 occurred in spite of the relatively small amount of the air (0.001 Nm³/min/m²) and the fine bubbles originally supplied in the aerobic tank were used for the membrane cleaning without an additional air from any other source, it can be seen that the energy consumptions of the Examples for the aeration cleaning were minimized without deterioration of the cleaning efficiency.

Particularly, in Examples 1-1, 1-2, 1-3, 2-1, 2-2, and 2-3 where the diameters of the aeration holes were 10mm or longer, the cleaning effects were so excellent that TMP rises of less than 0.01 bar were only observed.

Comparison of Example 2-5 with Comparative Example 5 shows that the bubbles produced by a relatively small aeration hole may be a hindrance to the membrane cleaning. It seems to be because the bubbles produced by a relatively small aeration hole cannot provide sufficient shear force on the membrane surface and, by providing oxygen, cause a biofilm contamination by microbes on the membrane surface.

## Claims

1. A membrane bioreactor system comprising:
an aerobic tank configured to receive a wastewater from at least one of a flow control tank, an anoxic tank and an anaerobic tank;
a fine bubble generator disposed in the aerobic tank to increase a dissolved oxygen of the wastewater introduced into the aerobic tank; and
a filtration apparatus submerged in the wastewater introduced into the aerobic tank, the filtration apparatus disposed directly above the fine bubble generator,
wherein the filtration apparatus comprises:
a filtration membrane module; and
a bubble-converting device disposed below the filtration membrane module and configured to convert a portion of fine bubbles provided by the fine bubble generator into coarse bubbles suitable for filtration membrane cleaning,
wherein the bubble-converting device comprises:
a case having a lower opening and a collecting space configured to confine the portion of the fine bubbles introduced therein via the lower opening;
a main pipe extending downwardly from a circumference of a first hole formed in an upper plate of the case; and
a branch pipe extending from a circumference of a second hole formed in a side of the main pipe, and
wherein the main pipe is in fluid communication with the collecting space via the branch pipe.

2. The membrane bioreactor system of claim 1, wherein a diameter of the first hole is 10 to 50 mm.

3. The membrane bioreactor system of claim 2, wherein the fine bubble generator is configured to provide the fine bubbles having a diameter of 1 to 3 mm.

4. The membrane bioreactor system of claim 1, wherein the filtration apparatus is disposed opposite a wastewater inlet of the aerobic tank in the aerobic tank.

5. The membrane bioreactor system of claim 1, wherein an opening of the branch pipe opposite to the second hole is positioned closer to the upper plate of the case than the second hole.

6. The membrane bioreactor system of claim 5, wherein the opening of the branch pipe faces the upper plate of the case.

7. The membrane bioreactor system of claim 1, further comprising a vibration apparatus configured to enable a rectilinear reciprocating movement of the filtration apparatus submerged in the wastewater.

8. The membrane bioreactor system of claim 7, wherein the vibration apparatus comprises:
a motor;
a rotor rotatable by the motor;
a shaft configured to convert a rotary motion of the rotor into a rectilinear reciprocating motion of the filtration apparatus; and
a rail configured to guide the rectilinear reciprocating motion of the filtration apparatus.

9. The membrane bioreactor system of claim 7, wherein the filtration apparatus further comprises a frame, and the filtration membrane module and the bubble-converting device are respectively installed in the frame.

10. The membrane bioreactor system of claim 9, further comprising a rod for coupling the bubble-converting device to the frame, the rod configured to enable the bubble-converting device to rotate on an axis of the rod within a predetermined angle range.

11. The membrane bioreactor system of claim 10, wherein the frame comprises a lower horizontal member having a third hole, one end of the rod is connected to the bubble-converting device, the other end of the rod is inserted in the third hole of the lower horizontal member, and a lower part of the rod has a curved cross section so that the rod can rotate in the third hole of the lower horizontal member within the predetermined angle range.
